# EUROPEAN PATENT APPLICATION

(11) **EP 4 541 478 A1**
(43) Date of publication of application: **23.04.2025**
(21) Application number: 24174107.3
(22) Date of filing: 03.05.2024
(51) Int. Cl.: B21D 28/00, B21D 28/26, B21D 28/34, H01M 4/04

(54) **BATTERY MANUFACTURING DEVICE AND MANUFACTURING METHOD**

(30) Priority: 19.10.2023 KR 20230140318
(71) Applicant: Samsung SDI Co., Ltd., Yongin-si, Gyeonggi-do 17084 (KR)
(72) Inventor: Lim, Hee Taek, 16678 Suwon-si, Gyeonggi-do (KR); Shin, Yong Seung, 16678 Suwon-si, Gyeonggi-do (KR); Cho, Jun Haeng, 16678 Suwon-si, Gyeonggi-do (KR); Jung, Sung Kyun, 16678 Suwon-si, Gyeonggi-do (KR); Lee, Seung Jun, 16678 Suwon-si, Gyeonggi-do (KR)
(74) Representative: Gulde & Partner

(57) **Abstract**

A device and method for manufacturing a battery, the device includes: a lower die configured to support an electrode; an upper die disposed above the lower die and connected to the lower die while vertically spaced therefrom; a lift configured to move the upper die upward or downward; a punch mounted on the upper die and inserted into the lower die to perform machining of the electrode; a sensor configured to detect a state of the punch; a controller configured to receive a detection signal of the sensor and monitor an insertion amount of the punch; and a corrector configured to correct a height of the punch according to a control signal of the controller.

## Description

### BACKGROUND

### 1. Field

The present disclosure relates to a device and method for manufacturing a battery.

### 2. Discussion of Related Art

In general, with rapidly increasing demand for portable electronics, such as laptops, video cameras, and mobile phones, and commercialization of robots and electric vehicles, research is actively carried out to develop high-performance secondary batteries enabling repeated charging/discharging.

A battery pack that is applicable to medium and large-sized electronic devices such as a laptop, a camcorder, a personal digital assistant (PDA), and a vehicle battery includes multiple unit cells due to a limitation on the capacity of a single unit cell.

An electrode is provided in a battery which is a unit cell. An electrode is manufactured through an electrode process, and the electrode process includes a process of machining an electrode.

An electrode shearing die performs a punching process for electrodes.

The information described herein is only for enhancing understanding of the background of the present disclosure and thus may also include information that does not constitute the related art.

### SUMMARY

The present invention is directed to a device and method for manufacturing a battery in which, during manufacture of electrodes, an insertion amount of a punch can be continuously observed to suppress electrode defects and improve durability of a die.

These and other aspects and features of the present invention will be described in or will be apparent from the following description of embodiments of the present invention.

According to an aspect of the present invention, there is provided a device for manufacturing a battery, the device including: a lower die configured to support an electrode; an upper die disposed above the lower die and connected to the lower die while vertically spaced therefrom; a lift configured to move the upper die upward or downward; a punch mounted on the upper die and inserted into the lower die to perform machining of the electrode; a sensor configured to detect a state of the punch; a controller configured to receive a detection signal of the sensor and monitor an insertion amount of the punch; and a corrector configured to correct a height of the punch according to a control signal of the controller.

The lower die may include: a lower base; a lower support mounted on the lower base and on which the electrode is seated; and a lower guide formed on the lower base and configured to guide the upper die.

The upper die may include: an upper holder configured to be vertically movable by the lift; an upper contact portion disposed to be spaced from a lower portion of the upper holder and configured to support the electrode and allow the punch to pass therethrough; an upper elastic portion configured to connect the upper holder and the upper contact portion and having an expandable/contractible length; and an upper guide formed on the upper holder and configured to be guided by the lower guide.

The sensor may include a first sensor mounted on the upper die and configured to detect a distance from the upper contact portion.

The first sensor may be provided as one or more first sensors disposed along a circumference of the punch.

The sensor may further include a second sensor mounted on the lower die and configured to detect a state in which the punch is inserted into the lower die.

The punch may include a punch machining device configured to pass through the upper die and perform machining of the electrode; and a punch connecting portion formed on the punch machining device and connected to the corrector.

The corrector may include: a correction support mounted on the upper die; and a correction rotating portion configured to be supported by the correction support, connected to the punch, and rotated to adjust the height of the punch.

The correction rotating portion may include: a rotating shaft rotatably mounted on the correction support; a rotating motor connected to the rotating shaft and configured to rotate the rotating shaft by control of the controller; and a rotating connection body connected to the rotating shaft and connected to the punch.

The rotating connection body may include: a pair of connection plates coupled to the rotating shaft; and a connecting shaft configured to connect the connection plates, pass through the punch, and adjust the height of the punch according to rotation of the connection plates.

According to another aspect of the present invention, there is provided a method for manufacturing a battery, the method including: an inputting operation in which an electrode is seated on a lower die; a measuring operation in which, while an upper die disposed above the lower die moves downward and a punch performs machining of the electrode, a sensor measures a state of the punch; a monitoring operation in which an insertion amount of the punch according to a thickness of the electrode is calculated according to a detection signal of the sensor and compared with a predetermined value; and a correcting operation in which, in a case where the insertion amount of the punch is different from the predetermined value, a corrector corrects a position of the punch so that the insertion amount of the punch reaches the predetermined value.

The measuring operation may include: a first measuring operation in which an upper holder is disposed at a first height; a second measuring operation in which a first sensor mounted on the upper holder measures a first distance between the upper holder and an upper contact portion which is disposed under the upper holder, spaced from the upper holder, and connected thereto by an upper elastic portion; a third measuring operation in which the upper holder moves downward to a second height, and the upper contact portion comes in contact with an upper side of the electrode; a fourth measuring operation in which the upper holder moves downward to a third height, and the punch performs machining of the electrode; and a fifth measuring operation in which, upon completion of the machining of the electrode, the first sensor measures a second distance between the upper holder and the upper contact portion.

The measuring operation may further include a sixth measuring operation in which a second sensor mounted on the lower die detects an insertion position of the punch.

The monitoring operation may include monitoring a change amount of a distance between the upper holder and the upper contact portion, the thickness of the electrode, and a third distance between a bottom point of the punch and a bottom surface of the upper contact portion.

The change amount of the distance between the upper holder and the upper contact portion may be a value obtained by subtracting a value of the second distance from a value of the first distance.

While the upper holder is positioned at the first height, a third sensor provided on the upper contact portion may detect the position of the punch to obtain the third distance.

While the upper holder is positioned at the first height, a fourth sensor mounted on the lower die may detect each of the position of the punch and a position of the upper contact portion to obtain the third distance.

While the upper holder is positioned at the first height, a fifth sensor provided on the corrector may detect the position of the punch to obtain the third distance.

In an embodiment where the first distance is D1, the second distance is D2, the third distance is D3, and D4 is the thickness of the electrode, the insertion amount of the punch may be (D1-D2-D3-D4).

The correcting operation may include: a first correcting operation in which a rotating motor is driven; a second correcting operation in which a rotating shaft connected to the rotating motor is rotated; and a third correcting operation in which a rotating connection body connected to the rotating shaft and passing through the punch adjusts a height of the punch.

By a device and method for manufacturing a battery according to one or more embodiments of the present invention, a state of a punch can be measured in real time by a sensor, and when a measured value is different from a predetermined value, a height of the punch can be adjusted through a corrector.

By a device and method for manufacturing a battery according to one or more embodiments of the present invention, a measured value and a predetermined value of a punch are maintained constant even during continuous work, and thus manufacturing defects of an electrode can be suppressed, and durability of a die can be improved.

According to still another aspect of the present invention, it is possible to provide a battery manufactured to have an improved structure, a battery pack manufactured using the battery, and a vehicle including the battery pack.

However, aspects and features of the present invention are not limited to those described above and other aspects and features not mentioned will be clearly understood by a person skilled in the art from the detailed.

### BRIEF DESCRIPTION OF THE DRAWINGS

The following drawings attached to this specification illustrate embodiments of the present invention, and further describe aspects and features of the present invention together with the detailed description of the present invention. Thus, the present invention should not be construed as being limited to the drawings:
FIG. 1 is a view schematically illustrating a battery manufacturing device according to one or more embodiments of the present invention;
FIG. 2 is a view schematically illustrating a lower die according to one or more embodiments of the present invention;
FIG. 3 is a view schematically illustrating an upper die according to one or more embodiments of the present invention;
FIG. 4 is a view schematically illustrating a first sensor according to one or more embodiments of the present invention;
FIG. 5 is a view schematically illustrating an arrangement state of the first sensor in FIG. 4;
FIG. 6 is a view schematically illustrating a second sensor according to one or more embodiments of the present invention;
FIG. 7 is a view schematically illustrating a punch according to one or more embodiments of the present invention;
FIG. 8 is a perspective view schematically illustrating a corrector according to one or more embodiments of the present invention;
FIG. 9 is a lateral view schematically illustrating the corrector according to one or more embodiments of the present invention;
FIG. 10 is a flowchart schematically illustrating a battery manufacturing method according to one or more embodiments of the present invention;
FIG. 11 is a flowchart schematically illustrating a measuring operation according to one or more embodiments of the present invention;
FIG. 12 is a view schematically illustrating the measuring operation according to one or more embodiments of the present invention;
FIG. 13 is a view schematically illustrating a third distance obtaining state according to a first embodiment of the present invention;
FIG. 14 is a view schematically illustrating a third distance obtaining state according to a second embodiment of the present invention;
FIG. 15 is a view schematically illustrating a third distance obtaining state according to a third embodiment of the present invention;
FIG. 16 is a flowchart schematically illustrating a correcting operation according to one or more embodiments of the present invention; and
FIG. 17 is a view schematically illustrating the correcting operation according to one or more embodiments of the present invention.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

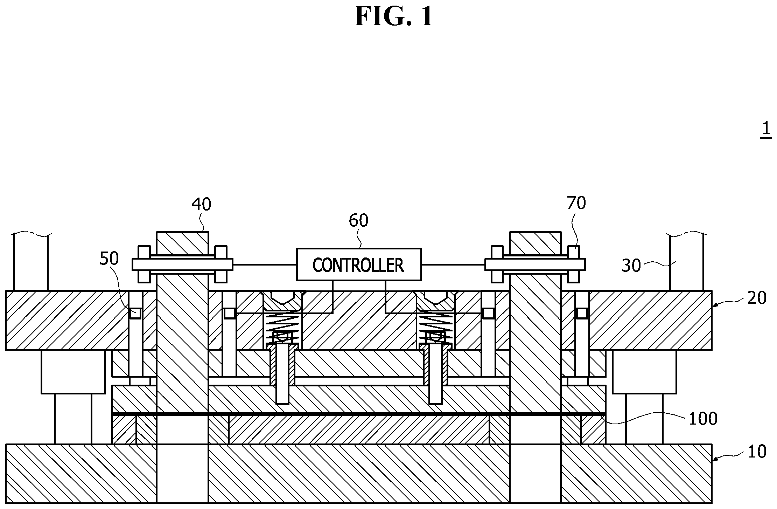

FIG. 1 is a view schematically illustrating a battery manufacturing device according to one or more embodiments of the present invention. Referring to FIG. 1, a battery manufacturing device 1 according to one or more embodiments of the present invention includes a lower die 10, an upper die 20, a lift 30, a punch 40, a sensor 50, a controller 60, and a corrector 70. An electrode 100 may pass between the lower die 10 and the upper die 20. The electrode 100 may be punched upon passing through the lower die 10 and the upper die 20.

The lower die 10 may support the electrode 100. The lower die 10 may have an upper side forming a flat surface to allow the electrode 100 to be seated thereon. The lower die 10 may be fixed to a fixed object and may be connected to the lift 30 and vertically moved as necessary.

The upper die 20 may be disposed above the lower die 10 and connected to the lower die 10 while vertically spaced therefrom. The lift 30 may move the upper die 20 upward or downward. The upper die 20 may move downward and fix the electrode 100 seated on the lower die 10.

The punch 40 may be mounted on the upper die 20 and inserted into the lower die 10 to perform machining of the electrode 100. The punch 40 may be provided as one or more punches 40 mounted on the upper die 20. The punch 40 may be directly coupled to the upper die 20. In addition, the punch 40 may be vertically movable from the upper die 20 and may be connected to the corrector 70 in order to be height-adjustable (e.g., move along a direction normal to the major surface of the lower die 10).

The sensor 50 may detect a state of the punch 40. The sensor 50 may be a distance sensor. The sensor 50 may detect an internal interval of the upper die 20 to detect an insertion depth of the punch 40. The sensor 50 may be provided as a plurality of sensors 50 mounted on the upper die 20 to measure a change in the internal interval of the upper die 20. The sensors 50 may move vertically to measure a real-time position of the punch 40 that performs machining of the electrode 100 (e.g., move along a direction normal to the major surface of the lower die 10).

The controller 60 may receive detection signals of the sensors 50 and monitor an insertion amount of the punch 40, for example, insertion along a direction normal to the major surface of the lower die 10. The controller 60 may check an error in values measured by the sensors 50 through a detection signal sent from each sensor 50. The controller 60 may measure the insertion amount of the punch 40 according to a predetermined mathematical equation.

The corrector 70 may correct a height of the punch 40 according to a control signal of the controller 60. The corrector 70 may be mounted on the upper die 20 and connected to the punch 40. In an embodiment where a predetermined insertion amount (predetermined value) and the measured insertion amount (measured value) are different, the controller 70 may adjust the height of the punch 40 so that the predetermined insertion amount and the measured insertion amount match or their deviation is minimized.

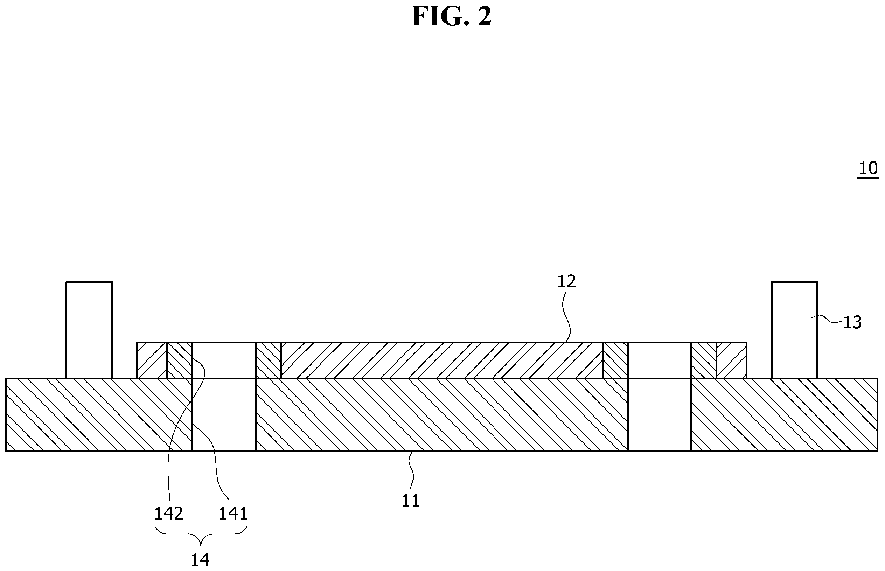

FIG. 2 is a view schematically illustrating a lower die according to one or more embodiments of the present invention. Referring to FIG. 2, the lower die 10 according to one or more embodiments of the present invention may include a lower base 11, a lower support 12, and a lower guide 13.

The lower base 11 may be installed on a fixed object such as, for example, the ground or a facility. The lower base 11 may be installed to be fixed to the fixed object. In addition, the lower base 11 may be assembled to the fixed object, and a mounting position of the lower base 11 may be changed.

The lower support 12 may be mounted on the lower base 11, and the electrode 100 may be seated on the lower support 12. The lower support 12 may be assembled to the lower base 11 and replaced when worn or damaged. The lower support 12 may be designed to correspond to the shape of the electrode 100 and may be replaced according to a target to be machined.

The lower guide 13 may be formed on the lower base 11 and guide the upper die 20. The lower support 12 may be disposed between a plurality of lower guides 13. The lower guide 13 may be formed in the shape of a tube that extends upward.

In addition, the lower die 10 may further include a lower hole portion 14. The lower hole portion 14 may include a first hole 141 formed in the lower base 11 and a second hole 142 formed in the lower support 12. The first hole 141 and the second hole 142 may be formed overlapping and/or in a straight line and may provide space in which scraps discarded after insertion of the punch 40 and machining by the punch 40 can be processed. The first and second holes 141, 142 may be formed with overlapping cross sections. They may be formed concentric. The first and second holes 141, 142 may be formed as through-holes.

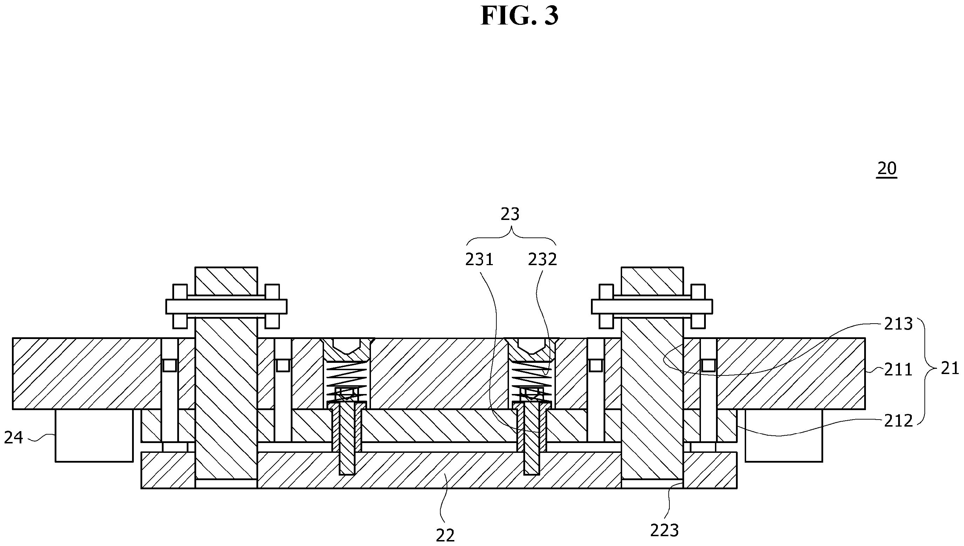

FIG. 3 is a view schematically illustrating an upper die 20 according to one or more embodiments of the present invention. Referring to FIG. 3, the upper die 20 according to one or more embodiments of the present invention may include an upper holder 21, an upper contact portion 22, an upper elastic portion 23, and an upper guide 24.

The upper holder 21 may be vertically movable by the lift 30 (e.g., move along a direction normal to the major surface of the lower die 10). The upper holder 21 may include a first holder 211 coupled to the lift 30 and a second holder 212 coupled to a lower portion of the first holder 211. The first holder 211 may be designed to be larger than the second holder 212. The first holder 211 may be designed to have a larger length and/or height than the second holder 212. The second holder 212 may be assembled to the lower portion of the first holder 211. A holder hole portion 213 may be formed in the upper holder 21 to allow the punch 40 to pass therethrough. The holder hole portion 213 may be formed as a through-hole.

The upper contact portion 22 may be disposed to be spaced from a lower portion of the upper holder 21, may support the electrode 100, and may allow the punch 40 to pass therethrough. The upper contact portion 22 may have a shape that corresponds to the second holder 212. The upper contact portion 22 may be disposed to be spaced from the second holder 212 and face the second holder 212. A contact hole portion 223 disposed in a straight line with the holder hole portion 213 and through which the punch 40 passes may be formed in the upper contact portion 22.

The upper elastic portion 23 may connect the upper holder 21 and the upper contact portion 22 and have an expandable/contractible length. The upper elastic portion 23 may include an elastic bar 231 coupled to the upper contact portion 22 and inserted into the first holder 211 and an elastic spring 232 mounted on the first holder 211 and connected to the elastic bar 231.

The upper guide 24 may be formed on the upper holder 21 and guided by the lower guide 13. The upper guide 24 may protrude downward from the first holder 211, and the lower guide 13 may be inserted into the upper guide 24. The lower guide 13 and the upper guide 24 may limit leftward and rightward movement of the upper die 20 that is moved vertically (e.g., move along a direction normal to the major surface of the lower die 10).

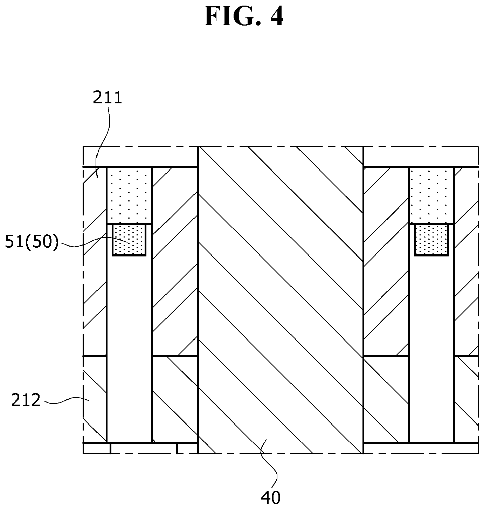

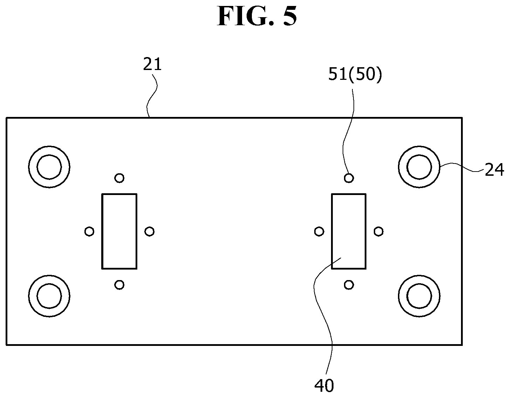

FIG. 4 is a view schematically illustrating a first sensor according to one or more embodiments of the present invention, and FIG. 5 is a view schematically illustrating an arrangement state of the first sensor in FIG. 4. Referring to FIGS. 4 and 5, the sensors 50 may include a first sensor 51. The first sensor 51 may be mounted on the upper holder 21 and may detect a distance from the upper contact portion 22. The first sensor 51 may be mounted on the first holder 211 and may detect the distance from the upper contact portion 22 that passes through the second holder 212 and may be disposed under the second holder 212. In addition, the first sensor 51 may be mounted on the second holder 212 and may detect the distance from the upper contact portion 22 that may be disposed under the second holder 212.

The first sensor 51 may include one or more first sensors 51 disposed along the circumference of the punch 40. In an embodiment where the punch 40 has a rectangular cross-section, the first sensor 51 may be disposed at each of the four sides of the punch 40 to detect a distance from the upper contact portion 22. In an embodiment where the punch 40 has a circular cross-section, a plurality of first sensors 51 may be disposed in the circumferential direction of the punch 40 to detect a distance from the upper contact portion 22.

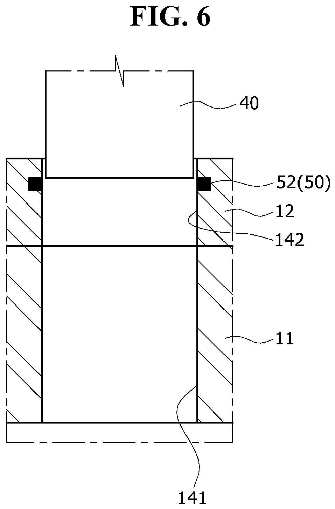

FIG. 6 is a view schematically illustrating a second sensor according to one or more embodiments of the present invention. Referring to FIG. 6, the sensors 50 may further include a second sensor 52. The second sensor 52 may be mounted on the lower die 10 and may detect a state in which the punch 40 is inserted into the lower die 10. The second sensor 52 may be mounted on the lower support 12 and may detect whether the punch 40 is inserted into the second hole 142. In addition, the second sensor 52 may include a plurality of second sensors 52 that are vertically disposed on an inner circumferential surface of the second hole 142 and may detect an insertion depth of the punch 40.

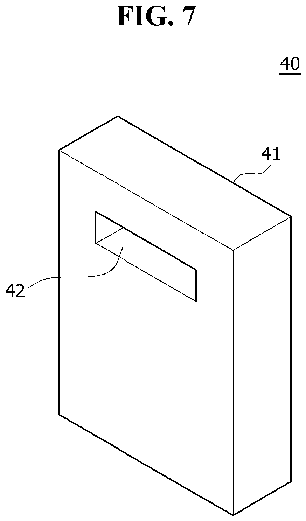

FIG. 7 is a view schematically illustrating a punch according to one or more embodiments of the present invention. Referring to FIG. 7, the punch 40 may include a punch machining device 41 and a punch connecting portion 42.

The punch machining device 41 may pass through the upper die 20 and may perform machining of the electrode 100. The punch machining device 41 may move vertically within the holder hole portion 213 formed in the upper die 20 (e.g., move along a direction normal to the major surface of the lower die 10). The shape of the punch machining device 41 may be changed to various shapes according to a machining shape.

The punch connecting portion 42 may be formed on the punch machining device 41 and may be connected to the corrector 70. The punch connecting portion 42 may form a slot in the horizontal direction of the punch machining device 41.

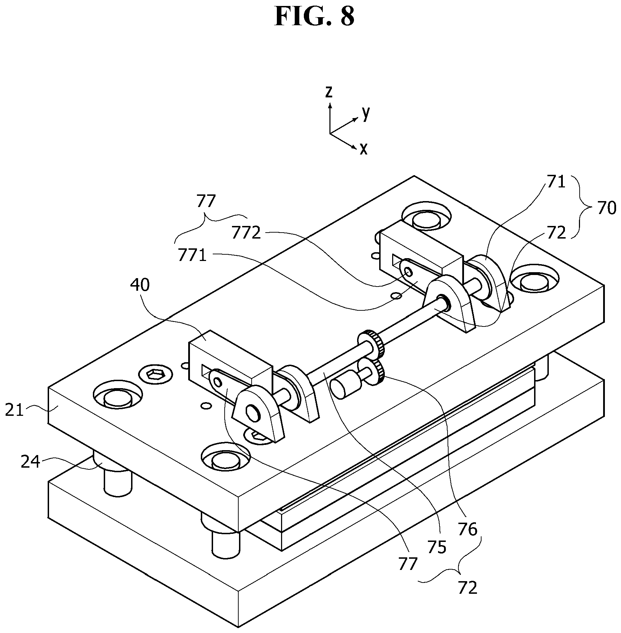

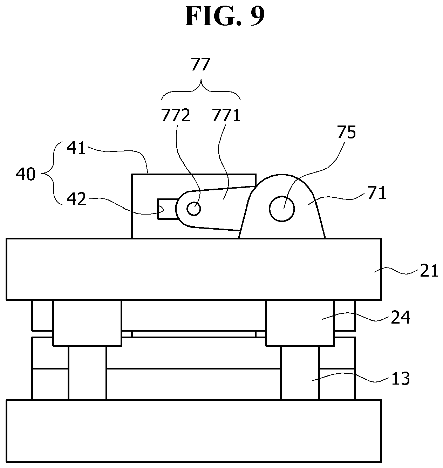

FIG. 8 is a perspective view schematically illustrating a corrector according to one or more embodiments of the present invention, and FIG. 9 is a lateral view schematically illustrating the corrector according to one or more embodiments of the present invention. Referring to FIGS. 8 and 9, the corrector 70 according to one or more embodiments of the present invention may include a correction support 71 and a correction rotating portion 72.

The correction support 71 may be mounted on the upper die 20. The correction support 71 may be coupled to an upper side of the upper holder 21. The correction support 71 may be coupled to the upper side of the upper holder 21 and may protrude in the z-axis direction. The correction support 71 may be disposed between a plurality of upper guides 24 and may include a plurality of correction supports 71 that are disposed to be spaced from each other in the y-axis direction of the upper holder 21.

The correction rotating portion 72 may be supported by the correction support 71 and connected to the punch 40. The correction rotating portion 72 may be rotated in an axial direction to adjust the height of the punch 40. The correction rotating portion 72 may pass through the punch connecting portion 42, which has a length in the x-axis direction, and maintain connection with the punch machining device 41. The punch 40 may be lifted or lowered according to a direction of rotation of the correction rotating portion 72.

The correction rotating portion 72 may include a rotating shaft 75, a rotating motor 76, and a rotating connection body 77.

The rotating shaft 75 may be rotatably mounted on the correction support 71. The rotating shaft 75 may have a length in the y-axis direction and pass through the correction support 71. A bearing provided on the correction support 71 may support the rotating shaft 75.

The rotating motor 76 may be connected to the rotating shaft 75 and may rotate the rotating shaft 75 by control of the controller 60. The rotating motor 76 may be coupled to the upper side of the upper holder 21. The rotating motor 76 may be engaged with a gear formed on a central portion of the rotating shaft 75 and may rotate the rotating shaft 75.

The rotating connection body 77 may be coupled to the rotating shaft 75 and connected to the punch 40. The rotating connection body 77 may include a connection plate 771 and a connecting shaft 772.

The connection plate 771 may be coupled to the rotating shaft 75. The connection plate 771 may be provided as a pair of connection plates 771 disposed to correspond to each punch 40. The pair of connection plates 771 may extend in the x-axis direction, and the punch 40 may be disposed between the pair of connection plates 771. The connection plates 771 may be interlocked with the rotating shaft 75.

The connecting shaft 772 may connect the connection plates 771 and pass through the punch 40. The connecting shaft 772 may adjust the height of the punch 40 according to rotation of the connection plates 771. The connecting shaft 772 may pass through the punch connecting portion 42.

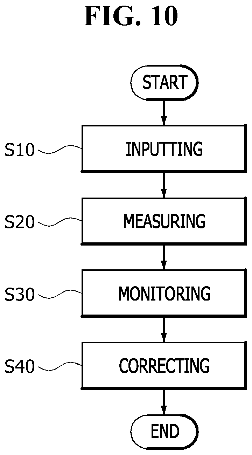

FIG. 10 is a flowchart schematically illustrating a battery manufacturing method according to one or more embodiments of the present invention. The battery manufacturing method according to one or more embodiments of the present invention will be described below with reference to FIG. 10.

In an inputting operation (S10), the electrode 100 may be seated on the lower die 10. The upper die 20 may be disposed above the lower die 10, and the electrode 100 may be input between the lower die 10 and the upper die 20. The input electrode may be seated on the lower support 12.

In a measuring operation (S20), while the upper die 20 disposed above the lower die 10 moves downward and the punch 40 performs machining of the electrode 100, the sensor 50 may detect a state of the punch 40. The sensor 50 may measure the height, the insertion depth, and the like of the punch 40.

In a monitoring operation (S30), the controller 60 may calculate the insertion amount of the punch 40 according to a thickness of the electrode 100 according to a detection signal of the sensor 50 and compare the calculated insertion amount with a predetermined value. That is, the controller 60 may receive a detection signal sent from the sensor 50 and derive the current insertion amount of the punch 40. Also, the controller 60 may compare a predetermined value, which has been preset for the insertion amount of the punch 40, and a measured value, which is the insertion amount of the punch 40 measured in real time, for example, insertion along a direction normal to the major surface of the lower die 10.

In a correcting operation (S40), if the insertion amount of the punch 40 calculated by the controller 60 according to the detection signal sent from the sensor 50 is different from the predetermined value, the corrector 70 may correct the position of the punch 40 so that the insertion amount of the punch 40 reaches the predetermined value, for example, insertion along a direction normal to the major surface of the lower die 10. The corrector 70 may be mounted on the upper die 20 and adjust the height of the punch 40 according to a direction and angle of rotation of the corrector 70.

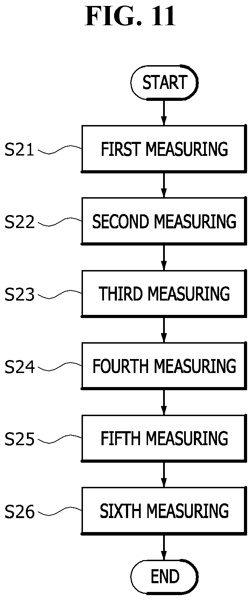

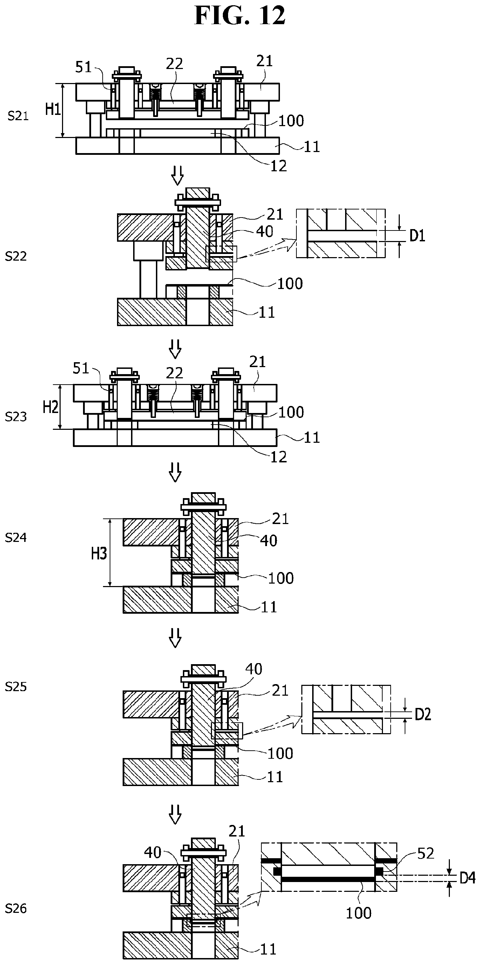

FIG. 11 is a flowchart schematically illustrating a measuring operation according to one or more embodiments of the present invention, and FIG. 12 is a view schematically illustrating the measuring operation according to one or more embodiments of the present invention. Referring to FIGS. 11 and 12, the measuring operation (S20) may include a first measuring operation (S21), a second measuring operation (S22), a third measuring operation (S23), a fourth measuring operation (S24), and a fifth measuring operation (S25).

In the first measuring operation (S21), the upper holder 21 may be disposed at a first height H1. The upper holder 21 may be lifted by the lift 30 and reach the first height H1. If the upper holder 21 is at the first height H1, the upper contact portion 22 may be disposed above the electrode 100. The first height H1 may be a height of an upper side surface of the upper holder 21 from an upper side surface of the lower base 11. Such a reference point may be changed according to an environment.

In the second measuring operation (S22), the first sensor 51 mounted on the upper holder 21 may measure a first distance D1 between the upper holder 21 and the upper contact portion 22 which is disposed under the upper holder 21, spaced from the upper holder 21, and connected thereto by the upper elastic portion 23. The first distance D1 may be measured in a state in which the upper holder 21 is disposed at the first height H1.

In the third measuring operation (S23), the upper holder 21 may move downward to a second height H2, and the upper contact portion 22 may come in contact with an upper side of the electrode 100. A sensor configured to detect contact between the upper contact portion 22 and the electrode 100 may be further provided. In addition, a sensor configured to detect pressure applied by the upper contact portion 22 may be provided on the lower support 12.

In the fourth measuring operation (S24), the upper holder 21 may move downward to a third height H3, and the punch 40 may perform machining of the electrode 100. If the upper holder 21 moves downward to the third height H3, the punch 40 may pass through the lower support 12 and may punch the electrode 100.

In the fifth measuring operation (S25), upon completion of the machining of the electrode 100, the first sensor 51 may measure a second distance D2 between the upper holder 21 and the upper contact portion 22. Here, the second distance D2 may be a minimum distance between the upper holder 21 and the upper contact portion 22. That is, the second distance D2 may be a distance between the upper holder 21 and the upper contact portion 22 if the punch 40 reaches the lowest point to perform machining of the electrode 100.

The measuring operation (S20) according to one or more embodiments of the present invention may further include a sixth measuring operation (S26).

In the sixth measuring operation (S26), the second sensor 52 mounted on the lower die 10 may detect an insertion position of the punch 40. The second sensor 52 may detect whether the punch 40 reaches a predetermined position.

The monitoring operation (S30) may include monitoring a change amount of the distance between the upper holder 21 and the upper contact portion 22, a thickness of the electrode 100, and a third distance D3 between a bottom point of the punch 40 and a bottom surface of the upper contact portion 22.

The change amount of the distance between the upper holder 21 and the upper contact portion 22 may be a value obtained by subtracting a value of the second distance D2 from a value of the first distance D1. The controller 60 may receive the first distance D1 measured in the second measuring operation (S22) and the second distance D2 measured in the fifth measuring operation (S25) and calculate the change amount of the distance between the upper holder 21 and the upper contact portion 22. The value obtained by subtracting the value of the second distance D2 from the value of the first distance D1 may be the change amount of the distance between the upper holder 21 and the upper contact portion 22.

A thickness D4 of the electrode 100 may be measured by a worker before the electrode 100 is input between the lower die 10 and the upper die 20. In addition, the third distance D3 between the bottom point of the punch 40 and the bottom surface of the upper contact portion 22 may be measured in the first measuring operation (S21) or the second measuring operation (S22). Before machining, the bottom point of the punch 40 may be disposed higher than the bottom surface of the upper contact portion 22.

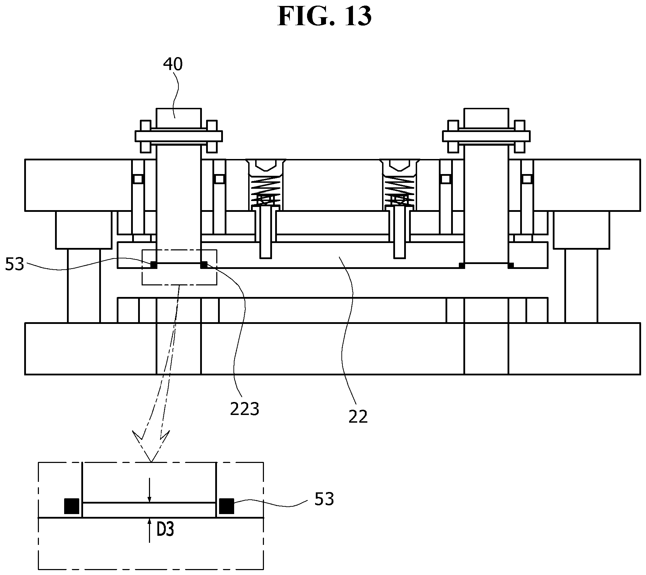

FIG. 13 is a view schematically illustrating a third distance obtaining state according to a first embodiment of the present invention. Referring to FIG. 13, if the upper holder 21 is positioned at the first height H1, a third sensor 53 provided on the upper contact portion 22 may detect the position of the punch 40 to obtain the third distance D3. The third sensor 53 may be mounted on the upper contact portion 22 and detect the position of the punch 40 inserted into the contact hole portion 223.

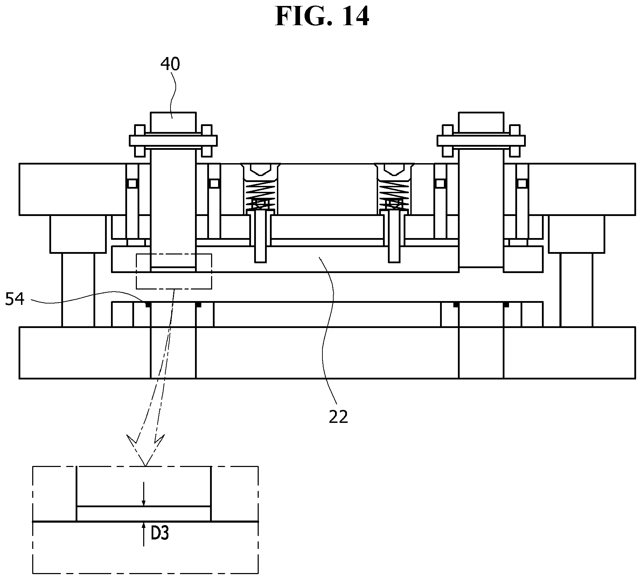

FIG. 14 is a view schematically illustrating a third distance obtaining state according to a second embodiment of the present invention. Referring to FIG. 14, if the upper holder 21 is positioned at the first height H1, a fourth sensor 54 mounted on the lower die 10 may detect each of the position of the punch 40 and the position of the upper contact portion 22 to obtain the third distance D3. The fourth sensor 54 may be mounted on the lower base 11 or the lower support 12 and measure the height of the punch 40 disposed above and the height of the upper contact portion 22. Here, the fourth sensor 54 may be disposed to prevent the electrode 100 from interfering with the fourth sensor 54. In addition, before the electrode 100 is input, the fourth sensor 54 may measure the height of the punch 40 and the height of the upper contact portion 22.

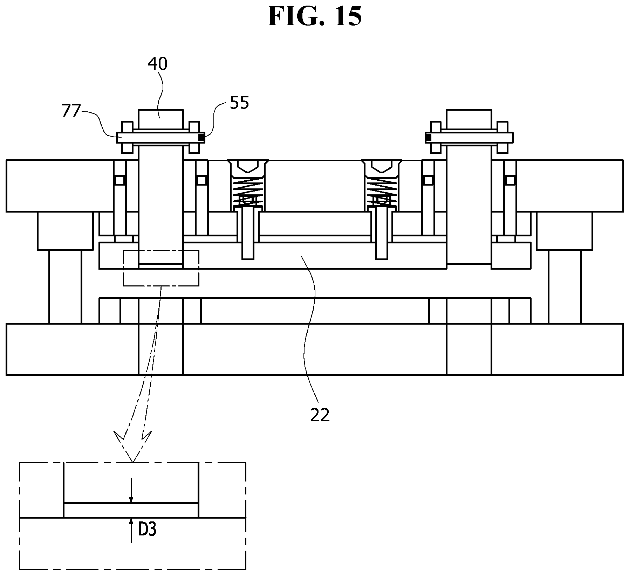

FIG. 15 is a view schematically illustrating a third distance obtaining state according to a third embodiment of the present invention. Referring to FIG. 15, if the upper holder 21 is positioned at the first height H1, a fifth sensor 55 provided on the corrector 70 may detect the position of the punch 40 to obtain the third distance D3. The fifth sensor 55 may measure an angle of the rotating shaft 75 or detect a rotation angle or a height of the rotating connection body 77 to measure the height of the punch 40. In embodiments, the height of the bottom surface of the upper contact portion 22 may be measured in an early stage of work.

Meanwhile, the insertion amount of the punch 40 may be equal to a value resulting from calculating: (first distance D1-second distance D2) - third distance D3 - thickness D4 of the electrode 100. The controller 60 may measure the insertion amount of the punch 40 using this equation, for example, insertion along a direction normal to the major surface of the lower die 10.

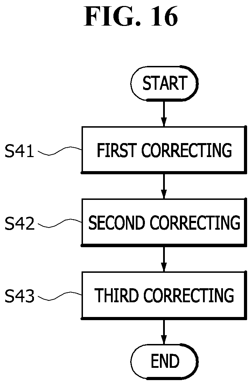

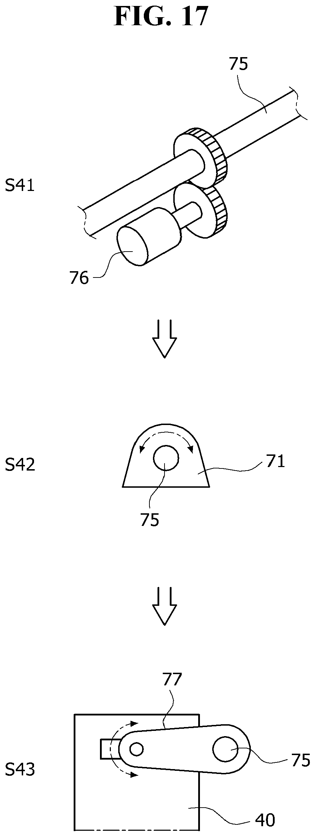

FIG. 16 is a flowchart schematically illustrating a correcting operation according to one or more embodiments of the present invention, and FIG. 17 is a view schematically illustrating the correcting operation according to one or more embodiments of the present invention. A correction process using the corrector 70 according to one or more embodiments of the present invention will be described below with reference to FIGS. 16 and 17.

In a first correcting operation (S41), the rotating motor 76 may be driven. The controller 60 may use a detection signal of the sensor 50 to calculate the insertion amount of the punch 40, for example, insertion along a direction normal to the major surface of the lower die 10. If the calculated insertion amount of the punch 40 is different from a predetermined value, the controller 60 may control the rotating motor 76 so that the rotating motor 76 is driven.

In a second correcting operation (S42), the rotating shaft 75 connected to the rotating motor 76 may be rotated. If the rotating motor 76 is driven, the rotating shaft 75 supported by the correction support 71 may be rotated.

In a third correcting operation (S43), the rotating connection body 77 connected to the rotating shaft 75 and passing through the punch 40 may adjust the height of the punch 40. The rotating shaft 75 and the rotating connection body 77 may be interlocked. According to an angle and direction of rotation of the rotating connection body 77, the punch 40 may be lifted or lowered and reach a predetermined height.

By a device and method for manufacturing a battery according to a embodiments of the present disclosure, during manufacture of electrodes, an insertion amount of a punch can be continuously observed to suppress electrode defects and improve durability of a die, for example, insertion along a direction normal to the major surface of the lower die 10.

By a device and method for manufacturing a battery according to embodiments of the present disclosure, a state of a punch can be measured in real time by a sensor, and if a measured value is different from a predetermined value, a height of the punch may be adjusted through a corrector.

By a device and method for manufacturing a battery according to embodiments of the present invention, a measured value and a predetermined value of a punch may be maintained constant even during continuous work, and thus manufacturing defects of an electrode may be suppressed, and durability of a die may be improved.

According to still another aspect of the present invention, it is possible to provide a battery manufactured to have an improved structure, a battery pack manufactured using the battery, and a vehicle including the battery pack.

Although the present invention has been described with reference to embodiments and drawings illustrating aspects thereof, the present invention is not limited thereto. Various modifications and variations can be made by a person skilled in the art to which the present invention belongs within the scope of the present invention.

## Claims

1. A device for manufacturing a battery, the device comprising:
a lower die (10) configured to support an electrode (100);
an upper die (20) disposed above the lower die (10) and connected to the lower die (10) while vertically spaced therefrom;
a lift (30) configured to move the upper die (20) upward or downward;
a punch (40) mounted on the upper die (20) and inserted into the lower die (10) to perform machining of the electrode (100);
a sensor (50) configured to detect a state of the punch (40);
a controller (60) configured to receive a detection signal of the sensor (50) and monitor an insertion amount of the punch (40); and
a corrector (70) configured to correct a height of the punch (40) according to a control signal of the controller (60).

2. The device for manufacturing the battery of claim 1, wherein the lower die (10) includes:
a lower base (11);
a lower support (12) mounted on the lower base (11) and on which the electrode (100) is seated; and
a lower guide (13) formed on the lower base (11) and configured to guide the upper die (20).

3. The device for manufacturing the battery of claim 2, wherein the upper die (20) includes:
an upper holder (21) configured to be vertically movable by the lift (30);
an upper contact portion (22) disposed to be spaced from a lower portion of the upper holder (21) and configured to support the electrode (100) and allow the punch (40) to pass therethrough;
an upper elastic portion (23) configured to connect the upper holder (21) and the upper contact portion (22) and having an expandable/contractible length; and
an upper guide (24) formed on the upper holder (21) and configured to be guided by the lower guide (13).

4. The device for manufacturing the battery of claim 3, wherein the sensor (50) includes a first sensor (51) mounted on the upper die (20) and configured to detect a distance from the upper contact portion (22).

5. The device for manufacturing the battery of claim 4, wherein the sensor (50) further includes a second sensor (52) mounted on the lower die (10) and configured to detect a state in which the punch (40) is inserted into the lower die (10).

6. The device for manufacturing the battery of any one of claims 1 to 5, wherein the corrector (70) includes:
a correction support (71) mounted on the upper die (20); and
a correction rotating portion (72) configured to be supported by the correction support (71), connected to the punch (40), and rotated (90) to adjust the height of the punch (40).

7. The device for manufacturing the battery of claim 6, wherein the correction rotating portion (72) includes:
a rotating shaft (75) rotatably mounted on the correction support (71);
a rotating motor (76) connected to the rotating shaft (75) and configured to rotate the rotating shaft (75) by control of the controller (60); and
a rotating connection body (77) connected to the rotating shaft (75) and connected to the punch (40).

8. A method for manufacturing a battery, the method comprising:
an inputting operation in which an electrode (100) is seated on a lower die (10);
a measuring operation in which, while an upper die (20) disposed above the lower die (10) moves downward and a punch (40) performs machining of the electrode (100), a sensor (50) measures a state of the punch (40);
a monitoring operation in which an insertion amount of the punch (40) according to a thickness of the electrode (100) is calculated according to a detection signal of the sensor (50) and compared with a predetermined value; and
a correcting operation in which, if the insertion amount of the punch (40) is different from the predetermined value, a corrector corrects a position of the punch (40) so that the insertion amount of the punch (40) reaches the predetermined value.

9. The method for manufacturing the battery of claim 8, wherein the measuring operation includes:
a first measuring operation in which an upper holder (21) is disposed at a first height;
a second measuring operation in which a first sensor (51) mounted on the upper holder (21) measures a first distance between the upper holder (21) and an upper contact portion (22) which is disposed under the upper holder (21), spaced from the upper holder (21), and connected thereto by an upper elastic portion (23);
a third measuring operation in which the upper holder (21) moves downward to a second height, and the upper contact portion (22) comes in contact with an upper side of the electrode (100);
a fourth measuring operation in which the upper holder (21) moves downward to a third height, and the punch (40) performs machining of the electrode (100); and
a fifth measuring operation in which, upon completion of the machining of the electrode (100), the first sensor (51) measures a second distance between the upper holder (21) and the upper contact portion (22).

10. The method for manufacturing the battery of claim 9, wherein the measuring operation further includes a sixth measuring operation in which a second sensor (52) mounted on the lower die (10) detects an insertion position of the punch (40).

11. The method for manufacturing the battery of claim 9 or 10, wherein the monitoring operation includes monitoring a change amount of a distance between the upper holder (21) and the upper contact portion (22), the thickness of the electrode (100), and a third distance between a bottom point of the punch (40) and a bottom surface of the upper contact portion (22).

12. The method for manufacturing the battery of claim 11, wherein, while the upper holder (21) is positioned at the first height, a third sensor (53) provided on the upper contact portion (22) detects the position of the punch (40) to obtain the third distance.

13. The method for manufacturing the battery of claim 11, wherein, while the upper holder (21) is positioned at the first height, a fourth sensor (54) mounted on the lower die (10) detects each of the position of the punch (40) and a position of the upper contact portion (22) to obtain the third distance.

14. The method for manufacturing the battery of claim 11, wherein, while the upper holder (21) is positioned at the first height, a fifth sensor (55) provided on the corrector detects the position of the punch (40) to obtain the third distance.

15. The method for manufacturing the battery of any one of claims 8 to 14, wherein the correcting operation includes:
a first correcting operation in which a rotating motor (76) is driven;
a second correcting operation in which a rotating shaft (75) connected to the rotating motor (76) is rotated (90); and
a third correcting operation in which a rotating connection body (77) connected to the rotating shaft (75) and passing through the punch (40) adjusts a height of the punch (40).
